# EUROPEAN PATENT APPLICATION

(11) **EP 4 825 997 A1**
(43) Date of publication of application: **21.10.2026**
(21) Application number: 24904342.3
(22) Date of filing: 11.10.2024
(51) Int. Cl.: C22B 3/06, C22B 3/22, C22B 1/00, C01G 53/10, H01M 10/54

(54) **RECYCLING METHOD OF VALUABLE METAL, AND RECOVERED VALUABLE METAL ALLOY PARTICLES AND SULFATE SOLUTION THEREFROM**

(30) Priority: 15.12.2023 KR 20230183127
(71) Applicant: POSCO Holdings Inc., Pohang-si, Gyeongsangbuk-do 37859 (KR); POSCO Co., Ltd, Gyeongsangbuk-do 37859 (KR)
(72) Inventor: KIM, Wanyi, Pohang-si, Gyeongsangbuk-do 37859 (KR); PARK, Junyong, Pohang-si, Gyeongsangbuk-do 37859 (KR); PARK, Joongkil, Pohang-si, Gyeongsangbuk-do 37859 (KR); KIM, Chun, Pohang-si, Gyeongsangbuk-do 37859 (KR); HAN, Sangwoo, Pohang-si, Gyeongsangbuk-do 37859 (KR)
(74) Representative: Pfenning, Meinig & Partner mbB
(86) International application number: PCT/KR2024/096327
(87) International publication number: WO 2025/127777

(57) **Abstract**

The method for recycling valuable metals according to the present invention comprises: preparing Ni-Co-Mn alloy particles having a compound including lithium and aluminum positioned on a surface thereof; primarily acid-leaching the alloy particles to selectively remove the compound including lithium and aluminum positioned on the surface of the alloy particles; and obtaining valuable-metal recovered alloy particles from which the compound including lithium and aluminum has been removed.

## Description

### [TECHNICAL FIELD]

The present invention relates to a method for recycling valuable metals, valuable-metal recovered alloy particles recovered using the same, and a sulfate solution.

### [BACKGROUND ART]

As demand for electric vehicles has been increasing worldwide, the issue of treating waste batteries generated from electric vehicles has emerged as a social issue.

In the case of lithium secondary batteries, which are main raw materials of waste batteries, organic solvents, explosive materials, valuable metals such as Ni, Co, and Mn, and heavy metal materials such as Fe are contained.

Among these, since Ni, Co, Mn, and Li have high scarcity value as valuable metals, recovery and recycling processes after disposal of lithium secondary batteries have emerged as important research fields.

Specifically, a lithium secondary battery mainly includes copper and aluminum used as current collectors, Li-, Ni-, Co-, and Mn-containing oxides constituting a positive electrode material, and graphite used as a negative electrode material, and includes a separator separating the positive electrode material and the negative electrode material and an electrolyte solution injected into the separator. As a solvent and a salt constituting the electrolyte solution, carbonate organic materials such as ethylene carbonate and propylene carbonate are mainly mixed and used, and, for example, LiPF₆ is used.

In order to utilize such waste batteries, development of waste battery recycling processes has been actively conducted, in which waste batteries are crushed to produce an intermediate material such as waste battery crushed material or black powder, and then valuable metals are recovered through a subsequent process.

The recovered valuable metals undergo a process of recovering valuable metals in batteries, such as Li, Ni, Co, and Mn, through acid leaching.

Valuable metals in batteries are acid-leached into an ionized state using an acid such as sulfuric acid, followed by a process for removing impurities. Ni, Co, Mn, and the like in sulfuric acid after removal of impurities are extracted in the form of sulfates through solvent extraction and crystallization. Solvent extraction for extracting Ni, Co, and Mn after impurities are removed uses a solvent that selectively recovers only each element, absorbs the corresponding element into the solvent while adjusting temperature and pH, and then washes the solvent again with sulfuric acid to prepare high-concentration Ni, Co, and Mn sulfate solutions.

At this time, there is a problem in that the price of each solvent used is high, thereby increasing manufacturing costs. In addition, there is a problem in that washing again with sulfuric acid is required, and thenardite (Na₂SO₄), which is generated by a precipitation reaction due to sodium hydroxide (NaOH) used to adjust pH, is generated in an amount about 3 to 5 times higher than the amount of produced sulfate product, thereby causing problems such as increased landfill costs and environmental pollution.

Accordingly, for an environmentally friendly and low-cost production process of Ni, Co, and Mn, which are key elements of secondary batteries, there is a need for research on a method for supplying raw materials for preparing nickel-containing batteries.

### [SUMMARY OF THE INVENTION]

### [Technical Problem]

The present invention is intended to provide a method for recycling valuable metals, which can be usefully used as a raw material for preparing a nickel-containing battery.

In addition, the present invention is intended to provide valuable-metal recovered alloy particles and a sulfate solution, which can be usefully used as a raw material for preparing a nickel-containing battery from a waste battery.

### [Technical Solution]

The present invention provides a method for recycling valuable metals, comprising: preparing Ni-Co-Mn alloy particles having a compound including lithium and aluminum positioned on a surface thereof; primarily acid-leaching the alloy particles to selectively remove the compound including lithium and aluminum positioned on the surface of the alloy particles; and obtaining valuable-metal recovered alloy particles from which the compound including lithium and aluminum has been removed.

In addition, the present invention provides valuable-metal recovered alloy particles derived from Ni-Co-Mn alloy particles having a compound including lithium and aluminum positioned on a surface thereof, wherein a content of one or more impurities selected from the group consisting of Al, Fe, and Cu is 15 wt% or less.

In addition, the present invention provides a sulfate solution including Ni, Co, and Mn derived from the above-described valuable-metal recovered alloy particles.

### [Advantageous Effects]

The method for recycling valuable metals according to the present invention has an advantage in that valuable-metal recovered alloy particles usefully applicable as a raw material for preparing a nickel-containing battery can be easily obtained. In addition, there is an advantage in that a high-purity nickel-containing sulfate solution for a precursor can be easily prepared without a separate solvent extraction process.

In addition, the valuable-metal recovered alloy and sulfate solution according to the present invention have an advantage in that they can be usefully used as a raw material for preparing a nickel-containing battery.

### [BRIEF DESCRIPTION OF THE DRAWINGS]

FIG. 1 is a graph showing a change in battery voltage according to cooling temperature according to some embodiments of the present invention.
FIG. 2 is a graph showing a relationship among battery weight, external cooling temperature, and cooling time according to some embodiments of the present invention.
FIG. 3 is an SEM image observing positive electrode active material precursors for a lithium secondary battery prepared according to Examples and Comparative Examples.

### [MODE FOR CARRYING OUT THE INVENTION]

Hereinafter, embodiments of the present invention will be described in detail. However, these are provided as examples, and the present invention is not limited thereby, and the present invention is only defined by the scope of the claims to be described below.

In the present invention, when a member is referred to as being positioned "on" another member, this includes not only a case in which the member is in direct contact with the other member, but also a case in which another member is interposed between the two members.

In the present invention, when a part is referred to as "comprising" a certain component, this means that other components may be further included, rather than excluding other components, unless specifically stated to the contrary.

### <Method for Recycling Valuable Metals>

One aspect of the present invention relates to a method for recycling valuable metals, comprising: preparing Ni-Co-Mn alloy particles having a compound including lithium and aluminum positioned on a surface thereof; primarily acid-leaching the alloy particles to selectively remove the compound including lithium and aluminum positioned on the surface of the alloy particles; and obtaining valuable-metal recovered alloy particles from which the compound including lithium and aluminum has been removed.

The method for recycling valuable metals according to the present invention has an advantage in that valuable-metal recovered alloy particles that can be usefully utilized as a raw material of a positive electrode active material precursor for a lithium secondary battery can be easily obtained by selectively removing the compound including lithium and aluminum from Ni-Co-Mn alloy particles.

In the present invention, the term "valuable metal" may refer to a valuable non-ferrous metal such as Li, Ag, Zn, or Cu, in addition to Ni, Co, and Mn.

Specifically, in the present invention, "valuable-metal recovered alloy particles" refer to Ni-Co-Mn alloy particles from which a compound including lithium and aluminum has been removed.

The method for recycling valuable metals according to the present invention includes preparing Ni-Co-Mn alloy particles having a compound including lithium and aluminum positioned on a surface thereof.

In an embodiment of the present invention, the step of preparing Ni-Co-Mn alloy particles having a compound including lithium and aluminum positioned on a surface thereof may include: preparing a battery containing lithium; crushing the battery into battery crushed material; high-temperature heat-treating the crushed battery crushed material; and separating Ni-Co-Mn alloy particles from the high-temperature heat-treated battery crushed material.

The step of preparing the battery containing lithium may be a step of treating various types of batteries including lithium ions. The battery may be, for example, a lithium secondary battery separated from a vehicle, or a secondary battery separated from an electronic device such as a mobile phone, a camera, or a notebook computer, and specifically may be a lithium secondary battery. More specifically, the battery may be a waste battery, and when the battery is a waste battery, there is an environmentally friendly advantage.

The step of preparing the battery containing lithium may include freezing the battery. The step of freezing the battery is a step for stabilizing an electrolyte solution in the battery, and when the battery is frozen, there is an advantage of reducing a risk of fire in a battery crushing step to be described below.

The step of freezing the battery may satisfy the following Equation 4. [Equation 4] $Minimum cooling time \left(Hr\right) = A \times \left({W}^{0.33}\right)$

In Equation 4,
A = 4 × e^{(-0.02×dT)}, W = battery weight (kg), dT = |external cooling temperature - target temperature|, and || means an absolute value.

The minimum cooling time of Equation 4 means the weight of the battery, and may mean, for example, the weight of a battery pack, a single battery, or a combination thereof. The minimum cooling time means an external cooling temperature, which is a cooling temperature applied to the battery, for example, a target temperature for cooling an electrolyte solution in the battery.

The step of freezing the battery is performed for the minimum cooling time or longer, whereby the inside of the battery, including the electrolyte solution, is cooled, and a subsequent process can be stably performed.

When the battery is frozen for a time shorter than the minimum cooling time in the step of freezing the battery, the electrolyte solution is not cooled, and thus there is a problem in that a risk of fire may occur during crushing.

The step of freezing the battery may be performed at a temperature sufficient to freeze an electrolyte contained in the battery. Specifically, the freezing step may be performed, for example, in a temperature range of -150°C to -20°C. More specifically, the temperature range may be - 150°C to -50°C, and even more specifically, may be -80°C to -60°C.

When the battery is frozen within the above temperature range, a voltage slightly remaining inside the battery, for example, a voltage of about 2 V to 3 V, decreases close to 0 V. Accordingly, even if a short circuit in which the positive electrode and the negative electrode directly contact each other occurs, a battery reaction does not occur, and thus the battery temperature does not increase, so that gas generation and combustion of the electrolyte do not occur.

In addition, since the electrolyte is in a frozen state or in a state in which vaporization is suppressed, mobility of lithium ions is very low, and electrical conduction characteristics due to movement of the lithium ions can be significantly reduced. Since vaporization of the electrolyte solution does not occur, flammable gases such as ethylene, propylene, and hydrogen may not be generated.

When the freezing process is outside the above temperature range, for example, when cooling is performed at a temperature higher than -60°C, the voltage remaining inside the battery does not decrease to 0 V, and thus a battery reaction due to a short circuit may occur, and the electrolyte is not completely frozen, which is not appropriate. In addition, when the battery is cooled to -150°C, the electrolyte is sufficiently frozen and the voltage inside the battery also decreases to 0 V, and thus it is not necessary to lower the temperature below this.

As described above, the battery treatment method includes freezing a battery such as a lithium secondary battery before crushing the battery, thereby having an advantage of preventing a risk of fire that may occur in the battery crushing process.

The step of crushing the battery into battery crushed material may mean a process of applying impact or pressure to the battery such that a part of the battery is detached from the battery.

The step of crushing the battery may mean all of a process of grinding the battery, a process of cutting the battery, a process of compressing the battery, and a combination thereof.

Specifically, the crushing step may include all processes capable of destroying the battery to obtain crushed material having a small size.

The step of crushing the battery may include all processes of compressing the prepared battery or destroying the battery by applying an external force such as shear force or tensile force. The step of crushing the battery may be performed using, for example, a crusher.

The step of crushing the battery may be performed at least once. Specifically, the crushing step may be performed continuously or non-continuously at least once.

The step of crushing the battery may be performed under a condition of supplying an inert gas, carbon dioxide, nitrogen, water, or a combination thereof, or under a vacuum atmosphere condition of 100 torr or less.

For example, when the process of freezing the battery is performed by cooling in a temperature range of -60°C to -20°C, if the crushing is performed under the above-described condition, oxygen supply can be suppressed, thereby preventing the electrolyte from reacting with oxygen, preventing explosion caused thereby, suppressing vaporization of the electrolyte solution, and not generating a flammable gas such as ethylene, propylene, or hydrogen.

The step of crushing the battery may be performed such that a maximum size of the battery crushed material is 100 mm or less. Specifically, the size of the battery crushed material may be 50 mm or less.

When the maximum size of the battery crushed material is 100 mm, as the battery crushed material is crushed, a heat generation temperature caused by instability rises to a temperature region of 120°C, which is an average vaporization temperature of the electrolyte solution, and thus a safety problem such as fire may occur.

The step of preparing the battery may include forcibly discharging the battery. The forced discharge electrically discharges the battery, and may reduce the voltage to 3.2 V or less using a reverse voltage to lower the voltage close to 0 V.

For example, when battery crushing is performed after carrying out the forced discharge after the step of freezing the battery, problems such as vaporization of the electrolyte solution during discharge can be prevented.

The step of high-temperature heat-treating the crushed battery crushed material may be introducing the battery crushed material into a furnace capable of increasing the temperature of the battery crushed material to a high temperature, and increasing the temperature of the battery crushed material to a temperature equal to or higher than a melting point.

The battery crushed material may include valuable metals such as Ni, Co, Mn, and Li.

The high-temperature heat treatment may involve heat treatment conditions under which a high-temperature reduction reaction is performed without a melting step of the battery.

The step of high-temperature heat-treating the battery crushed material may be performed in a range of 600°C to 1,500°C. Specifically, the high-temperature heat-treating step may be performed in a range of 800°C to 1,400°C, and more specifically 1,000°C to 1,350°C.

When the upper limit of the above range is exceeded, there is a problem of loss of lithium due to vaporization of lithium. When the lower limit of the above range is not satisfied, sintering and reduction of alloy elements do not proceed smoothly, and a stabilized lithium-containing compound cannot be formed, so that when a compound including lithium and aluminum is recovered in the future, it is difficult to recover a stabilized compound.

In addition, as the temperature increases, Li₅AlO₄ is generated due to the reaction LiAlO₂(s)+2Li₂CO₃(s)=Li₅AlO₄+2CO₂(g), but a LiF(g) vaporization reaction is promoted, and thus it is preferable that the reaction temperature be performed within the above range.

In addition, in a range of less than 600°C, MnO among Li-containing Ni, Co, and Mn oxides in the positive electrode material is not dissociated, and MnAl₂O₄ is generated due to the reaction MnO(s)+2Al(s)+3/2O₂=MnAl₂O₄(s), so that the Li concentration in the compound including lithium and aluminum decreases, thereby causing a problem in that the Li recovery rate decreases.

The step of high-temperature heat-treating the battery crushed material may be performed in an atmosphere of at least one gas among an inert gas, carbon dioxide, carbon monoxide, a hydrocarbon gas, and oxygen.

The inert gas may include, for example, at least one of argon and nitrogen. When a reduction reaction of the crushed material is performed in the gas atmosphere, there is an advantage in that a recovery rate of valuable metal elements contained in the battery crushed material can be increased.

The step of high-temperature heat-treating the crushed battery crushed material may be performed in a gas atmosphere having a temperature range of 600°C to 1,500°C and an oxygen concentration range of 0.1 vol% to 2.0 vol%.

Specifically, the step may be performed in a gas atmosphere having an oxygen concentration range of 0.4 vol% to 1.2 vol%.

When the oxygen concentration in the gas exceeds the upper limit, as the oxygen range increases, the reaction Li₂O+C+O₂(g)=Li₂CO₃ is promoted, causing a problem in that LiAlO₂ and Li₅AlO₄ decrease. Therefore, it is preferable that the oxygen range be performed at 2 vol% or less, which is the above-described range. When the oxygen concentration is below the lower limit of the above-described range, carbon dioxide is excessively formed during the reduction reaction and is gasified and lost together with lithium, or Li₂CO₃(s) is excessively generated, causing a problem in that recovery by primary acid leaching is difficult.

The step of high-temperature heat-treating the Ni-, Co-, Mn-, and Li-containing battery crushed material may be performed in a gas atmosphere including at least one of an inert gas, carbon dioxide, carbon monoxide, and a hydrocarbon gas; and oxygen.

The method may include separating a Ni-Co-Mn alloy from the high-temperature heat-treated battery crushed material.

The separation of the Ni-Co-Mn alloy, specifically Ni-Co-Mn alloy particles having a compound containing lithium and aluminum positioned on a surface thereof, may be performed by a magnetic separation method, but is not limited thereto.

The method for recycling valuable metals according to the present invention includes primarily acid-leaching the alloy particles to selectively remove the compound including lithium and aluminum positioned on the surface of the alloy particles.

The compound including lithium and aluminum may be one or more selected from the group consisting of LiAlO₂, Li₅AlO₄, LiAl₅O₈, Li₂CO₃, LiF, Li₃PO₄, Li₂SiO₃, Li₄SiO₄, and Li₂Si₂O₅.

Specifically, since the method for recycling valuable metals according to the present invention uses Ni-Co-Mn alloy particles derived from a waste battery and having a compound including lithium and aluminum positioned on a surface thereof, the compound including lithium and aluminum may be positioned on the surface of the alloy particles.

Accordingly, the compound including lithium and aluminum can be selectively leached from the Ni-Co-Mn alloy particles, and the compound including lithium and aluminum, which may act as an impurity when preparing a high-purity Ni-containing sulfate solution, can be removed.

Without wishing to be bound by theory, selective leaching of the compound including lithium and aluminum from Ni-Co-Mn alloy particles obtained through high-temperature heat treatment and having the compound including lithium and aluminum positioned on a surface thereof can be explained by the following reaction schemes.

[Reaction Scheme 1] Ni(s)+H₂SO₄(aq)=NiSO₄(aq)+H₂(g), ΔG°m=-46.3 (kJ/mol)

[Reaction Scheme 2] Co(s)+H₂SO₄(aq)=CoSO₄(aq)+H₂(g), ΔG°m=-54.7 (kJ/mol)

[Reaction Scheme 3] Li₂O(s)+H₂SO₄(aq)=Li₂SO₄(aq)+H₂O(aq), ΔG°m=-260.5 (kJ/mol)

As shown in Reaction Schemes 1 and 2, Gibbs free energy during leaching of Ni and Co in sulfuric acid is -46 kJ/mol to -53 kJ/mol, which is about 20% lower than Gibbs free energy during leaching of lithium oxide in sulfuric acid (-260.5 kJ/mol), and thus the leaching reaction is not accelerated.

Accordingly, the compound including lithium and aluminum positioned on the surface of the Ni-Co-Mn alloy particles can be selectively removed.

The step of primarily acid-leaching the alloy particles to selectively remove the compound including lithium and aluminum positioned on the surface of the alloy particles may be performed at a pH of 0.2 to 4.0, specifically 0.5 to 3.0, and more specifically 0.8 to 2.0.

When the pH satisfies the above range, leaching of the compound including lithium and aluminum is excellent, which is preferable.

The step of primarily acid-leaching the alloy particles to selectively remove the compound including lithium and aluminum positioned on the surface of the alloy particles may be performed using an acid.

Specifically, the step of primarily acid-leaching the alloy particles to selectively remove the compound including lithium and aluminum positioned on the surface of the alloy particles may be performed using sulfuric acid.

An equivalent ratio of the alloy particles to the sulfuric acid may be 1:0.5 to 1:4.0, specifically 1:1.0 to 1:3.8, and more specifically 1:1.5 to 1:3.5.

When the sulfuric acid equivalent ratio satisfies the above range, it is preferable because the leaching rate of the compound including lithium and aluminum can be increased while minimizing the content of sulfuric acid.

The step of primarily acid-leaching the alloy particles to selectively remove the compound including lithium and aluminum positioned on the surface of the alloy particles may be performed at a temperature of 10°C to 200°C, specifically 30°C to 150°C, and more specifically 50°C to 85°C.

When the performance temperature satisfies the above range, it is preferable because boiling over of the sulfuric acid is suppressed while leaching efficiency of the compound including lithium and aluminum is excellent.

In another embodiment of the present invention, the step of primarily acid-leaching the alloy particles to selectively remove the compound including lithium and aluminum positioned on the surface of the alloy particles may be performed for 240 minutes or less, preferably 60 minutes to 180 minutes, and more preferably 90 minutes to 120 minutes.

When the step of primarily acid-leaching the alloy particles to selectively remove the compound including lithium and aluminum positioned on the surface of the alloy particles, that is, acid leaching of the lithium compound, is performed within the above time range, it is preferable because the leaching rate of the compound including lithium and aluminum can be increased while minimizing leaching time.

The method for recycling valuable metals according to the present invention includes obtaining valuable-metal recovered alloy particles from which the compound including lithium and aluminum has been removed.

The valuable-metal recovered alloy particles may be obtained by magnetically separating or solid-liquid separating an acid aqueous solution including the leached compound including lithium and aluminum and an unleached Ni-Co-Mn alloy residue.

In another embodiment of the present invention, the method may further include secondarily acid-leaching the obtained valuable-metal recovered alloy particles to obtain a sulfate solution including Ni, Co, and Mn.

In another embodiment of the present invention, the method may further include preparing a metal hydroxide precursor containing Ni, Co, and Mn using the obtained sulfate solution.

In another embodiment of the present invention, in the step of secondarily acid-leaching the obtained valuable-metal recovered alloy particles to obtain the sulfate solution including Ni, Co, and Mn, the secondary acid leaching may be performed while adding oxygen.

When the secondary acid leaching is performed while adding oxygen, there is an advantage in that the leaching rate of Ni, Co, and Mn can be accelerated, which is preferable.

In another embodiment of the present invention, the oxygen may be supplied at a rate of 0.1 Nm³/hr to 20.0 Nm³/hr, specifically 1 Nm³/hr to 15 Nm³/hr, and more specifically 3 Nm³/hr to 8 Nm³/hr.

When the oxygen supply rate satisfies the above range, leaching rate is excellent and the leaching rate can be accelerated, which is preferable.

The oxygen partial pressure may be 0.1 atm to 1.0 atm, preferably 0.2 atm to 1.0 atm, and more preferably 0.4 atm to 1.0 atm.

When the secondary acid leaching is performed under an atmosphere in which the oxygen partial pressure satisfies the above range, the phenomenon of accelerating the leaching rate is maximized, which is preferable.

In the step of secondarily acid-leaching the obtained valuable-metal recovered alloy particles to obtain the sulfate solution including Ni, Co, and Mn, air or hydrogen peroxide may be further blown in addition to the oxygen, but the present invention is not limited thereto.

In another embodiment of the present invention, the step of secondarily acid-leaching the obtained valuable-metal recovered alloy particles to obtain the sulfate solution including Ni, Co, and Mn may be performed under a pressurized condition.

In other words, acid leaching of the obtained valuable-metal recovered alloy particles may be pressurized leaching.

In another embodiment of the present invention, the pressurized condition may be 20 atm or less, preferably 2 atm to 16 atm, and more preferably 4 atm to 16 atm.

When the pressurized condition satisfies the above range, it is preferable because the leaching rates of Ni, Co, and Mn can be increased.

In another embodiment of the present invention, the step of secondarily acid-leaching the obtained valuable-metal recovered alloy particles to obtain the sulfate solution including Ni, Co, and Mn may be performed at a temperature of 10°C to 200°C.

In another embodiment of the present invention, the step of secondarily acid-leaching the obtained valuable-metal recovered alloy particles to obtain the sulfate solution including Ni, Co, and Mn may be performed in a pH range of 0.2 to 4.0.

In another embodiment of the present invention, in the step of secondarily acid-leaching the obtained valuable-metal recovered alloy particles to obtain the sulfate solution including Ni, Co, and Mn, an equivalent ratio of an acid may be 0.5 to 4.0.

That is, in the step of secondarily acid-leaching the obtained valuable-metal recovered alloy particles to obtain the sulfate solution including Ni, Co, and Mn, the above-described contents regarding acid leaching in the step of primarily acid-leaching the alloy particles to selectively remove the compound including lithium and aluminum positioned on the surface of the alloy particles may be applied to conditions of the secondary acid leaching, such as temperature, pH, and equivalent ratio of sulfuric acid.

In another embodiment of the present invention, the method may further include, after the step of secondarily acid-leaching the obtained valuable-metal recovered alloy particles to obtain the sulfate solution including Ni, Co, and Mn, adding sodium hydrosulfide (NaHS) to the sulfate solution to remove copper from the sulfate solution.

Without wishing to be bound by theory, when the sodium hydrosulfide is added, Cu among impurities can be removed based on the reaction of the following Reaction Scheme 5.

[Reaction Scheme 5] 2CuSO₄(aq)+2NaHS=2CuS(s)+Na₂SO₄(aq)+H₂SO₄(aq)

In another embodiment of the present invention, the sodium hydrosulfide may be added in an amount of 0.01 mol/L to 0.5 mol/L, preferably 0.05 mol/L to 0.5 mol/L, and more preferably 0.1 mol/L to 0.4 mol/L.

When the sodium hydrosulfide is included within the above range, it is preferable because the removal rate of copper can be increased while minimizing the input amount of the sodium hydrosulfide.

In another embodiment of the present invention, the method may further include, after the step of secondarily acid-leaching the obtained valuable-metal recovered alloy particles to obtain the sulfate solution including Ni, Co, and Mn, adding sodium hydroxide to the sulfate solution to remove iron and aluminum from the sulfate solution.

Preferably, the method may further include, after the step of secondarily acid-leaching the obtained valuable-metal recovered alloy particles to obtain the sulfate solution including Ni, Co, and Mn, adding sodium hydrosulfide (NaHS) to the sulfate solution to remove copper from the sulfate solution, and adding sodium hydroxide to the sulfate solution to remove residual iron and aluminum from the sulfate solution.

Without wishing to be bound by theory, when the sodium hydroxide is added, iron and aluminum among impurities can be removed based on the reactions of the following Reaction Schemes 6 and 7.

[Reaction Scheme 6] Al₂(SO₄)₃(aq)+6NaOH=2Al(OH)₃(s)+3Na₂SO₄(aq)+H₂SO₄(aq)

[Reaction Scheme 7] Fe₂(SO₄)₃(aq)+6NaOH=2Fe(OH)₃(s)+3Na₂SO₄(aq)+H₂SO₄(aq)

In another embodiment of the present invention, the sodium hydroxide may be added in an amount of 0.01 mol/L to 0.5 mol/L, preferably 0.05 mol/L to 0.5 mol/L, and more preferably 0.1 mol/L to 0.4 mol/L.

When the sodium hydroxide is included within the above range, it is preferable because the removal rate of iron and aluminum can be increased while minimizing the input amount of the sodium hydroxide.

After the step of obtaining the sulfate solution, the method may further include ion-exchanging the sulfate solution to remove impurities.

That is, after sodium hydrosulfide is added to remove copper and sodium hydroxide is added to remove residual iron and aluminum, the method may further include ion-exchanging the sulfate solution in order to remove impurities such as calcium and magnesium remaining in a small amount in the sulfate solution.

The ion exchange may be performed by passing the sulfate solution through an ion-exchange resin, but is not limited thereto.

The method for recycling valuable metals according to the present invention may include preparing a metal hydroxide precursor containing Ni, Co, and Mn using the obtained sulfate solution.

The step of preparing the metal hydroxide precursor containing Ni, Co, and Mn may be performed by adding a complexing agent such as ammonia or ammonium sulfate to the sulfate solution and carrying out a coprecipitation reaction, but is not limited thereto.

### <Valuable-Metal Recovered Alloy Particles and Sulfate Solution>

Another aspect of the present invention relates to valuable-metal recovered alloy particles derived from Ni-Co-Mn alloy particles having a compound including lithium and aluminum positioned on a surface thereof, wherein a content of one or more impurities selected from the group consisting of Al, Fe, and Cu is 15 wt% or less.

Specifically, in the valuable-metal recovered alloy particles, the content of one or more impurities selected from the group consisting of Al, Fe, and Cu is 15 wt% or less, based on 100 wt% of the total valuable-metal recovered alloy particles.

Since the valuable-metal recovered alloy particles according to the present invention are derived from Ni-Co-Mn alloy particles having a compound including lithium and aluminum positioned on a surface thereof, there is an advantage in that the content of one or more impurities selected from the group consisting of Al, Fe, and Cu is low.

Preferably, the content of one or more impurities selected from the group consisting of Al, Fe, and Cu may be 10 wt% or less.

More preferably, the total content of the impurities may be 20 wt% or less, and most preferably, the total content of the impurities may be 15 wt% or less.

In another embodiment of the present invention, the valuable-metal recovered alloy particles may satisfy the following Equations 1 and 2. [Equation 1] $0.8 \leq \left[Ni\right] / \left[Co\right] \leq 20$ [Equation 2] $0.12 \leq \left[Ni\right] / \left[Mn\right] \leq 20$

In Equations 1 and 2, [Ni], [Co], and [Mn] are molar ratios of Ni, Co, and Mn in the valuable-metal recovered alloy, respectively.

The valuable-metal recovered alloy particles may satisfy Equations 1 and 2 because they are derived from Ni-Co-Mn alloy particles having a compound including lithium and aluminum positioned on a surface thereof, and the Ni-Co-Mn alloy particles are derived from a waste battery. Accordingly, the valuable-metal recovered alloy particles can be usefully utilized as a raw material of a positive electrode active material precursor for a lithium secondary battery.

Specifically, Equation 1 may satisfy 2.0 to 7.0, and more specifically 2.5 to 5.0.

When Equation 1 is satisfied, the valuable-metal recovered alloy particles can be usefully applied to preparation of a high-nickel positive electrode active material precursor, and particularly, when applied to preparation of a high-nickel positive electrode active material precursor, there is an advantage of reducing costs of raw materials, which is preferable.

Specifically, Equation 2 may satisfy 0.5 to 7.0, and more specifically 1.0 to 5.0.

When Equation 2 is satisfied, the valuable-metal recovered alloy particles can be usefully applied to preparation of a high-nickel positive electrode active material precursor, and particularly, there is an advantage of imparting high stability, which is preferable.

In another embodiment of the present invention, the valuable-metal recovered alloy particles may satisfy the following Equation 3. [Equation 3] $0.02 \leq \left[C\right] / \left[Ni\right] \leq 7$

In Equation 3, [C] and [Ni] are contents (wt%) of C and Ni in the valuable-metal recovered alloy particles, respectively.

Specifically, Equation 3 may be 0.05 to 5, and more specifically 1 to 4.

Since the valuable-metal recovered alloy particles are derived from a Ni-Co-Mn alloy derived from a waste battery, graphite may be contained.

Specifically, Equation 3 is a relational expression for a ratio between C and Ni contents in the valuable-metal recovered alloy particles. When Equation 3 is satisfied, in a dry-wet smelting process for recycling a battery for a lithium secondary battery, graphite is dissolved in the alloy, generation of CO₂(g) during the process is suppressed, impurity control is easy, and a high-concentration nickel sulfate-containing sulfate solution can be obtained, which is preferable.

In another embodiment of the present invention, the valuable-metal recovered alloy particles may include Ni, Co, and Mn in an amount of 45 wt% or more, specifically 50 wt% to 95 wt%, and more specifically 60 wt% to 85 wt%, based on 100 wt% of the total valuable-metal recovered alloy particles.

When Ni, Co, and Mn are included within the above range, it is preferable because the content of impurities in the valuable-metal recovered alloy is low, and thus a high-purity sulfate solution can be obtained.

In another embodiment of the present invention, the valuable-metal recovered alloy particles may include lithium in an amount of 5 wt% or less, preferably 3 wt% or less, and more preferably 1 wt% or less, based on 100 wt% of the total valuable-metal recovered alloy particles.

The valuable-metal recovered alloy particles have an advantage of substantially not including a compound including lithium and aluminum. Accordingly, process cost and time for purifying lithium can be reduced, and when the valuable-metal recovered alloy particles are used, a high-purity sulfate solution can be obtained, which is preferable.

Another aspect of the present invention relates to a sulfate solution including Ni, Co, and Mn derived from the above-described valuable-metal recovered alloy particles.

The acid concentration of the sulfate solution, the equivalent ratio of the valuable-metal recovered alloy particles to sulfuric acid, and the like may be as described above.

The content of Ni in the sulfate solution may be 0.2 mol/L to 2.0 mol/L, specifically 0.4 mol/L to 2.0 mol/L, and more specifically 0.6 mol/L to 1.5 mol/L.

When the content of Ni in the sulfate solution satisfies the above range, a high-capacity battery can be easily achieved, and the sulfate solution can be usefully applied to preparation of a positive electrode active material precursor for a lithium secondary battery having excellent structural stability, which is preferable.

The content of Co in the sulfate solution may be 0.04 mol/L to 1.0 mol/L, specifically 0.06 mol/L to 0.8 mol/L, and more specifically 0.1 mol/L to 0.5 mol/L.

When the content of Co in the sulfate solution satisfies the above range, the sulfate solution can be usefully applied to preparation of a positive electrode active material precursor capable of simultaneously achieving sufficient rate characteristics and high powder density of a positive electrode active material for a lithium secondary battery, which is preferable.

The content of Mn in the sulfate solution may be 0.04 mol/L to 2.0 mol/L, specifically 0.06 mol/L to 1.5 mol/L, and more specifically 0.08 mol/L to 1.0 mol/L.

When the content of Mn in the sulfate solution satisfies the above range, the sulfate solution can be usefully applied to preparation of a positive electrode active material precursor having high stability and capable of improving capacity and output characteristics of a battery, which is preferable.

Specifically, in the sulfate solution according to the present invention, the content of Ni in the sulfate solution may be 0.2 mol/L to 2.0 mol/L, the content of Co may be 0.04 mol/L to 1.0 mol/L, and the content of Mn may be 0.04 mol/L to 2.0 mol/L.

The sulfate solution may be recovered from a waste battery.

In another embodiment of the present invention, the sulfate solution may include aluminum in an amount of 2.5 mol/L or less.

Since the sulfate solution according to the present invention is prepared by the above-described method for recycling valuable metals, the content of aluminum is very low, and accordingly, there is an advantage of high purity.

In another embodiment of the present invention, the sulfate solution may include one or more impurities selected from the group consisting of Li, Cu, Ti, Zn, Pb, P, Ca, Mg, B, K, Na, Si, and Fe.

The impurities may be derived from the valuable-metal recovered alloy.

In another embodiment of the present invention, the content of each element included in the impurities may be 2.5 mol/L or less, specifically 2.0 mol/L or less, and more specifically 1.5 mol/L or less.

When the content of each element included in the impurities satisfies the above range, the purity of Ni, Mn, and Co in the sulfate solution is high, which is preferable.

Hereinafter, preferred Examples and Comparative Examples of the present invention will be described. However, the following Examples are merely preferred embodiments of the present invention, and the present invention is not limited to the following Examples.

### <Experimental Example>

### Internal Temperature of Battery According to Minimum Freezing Time

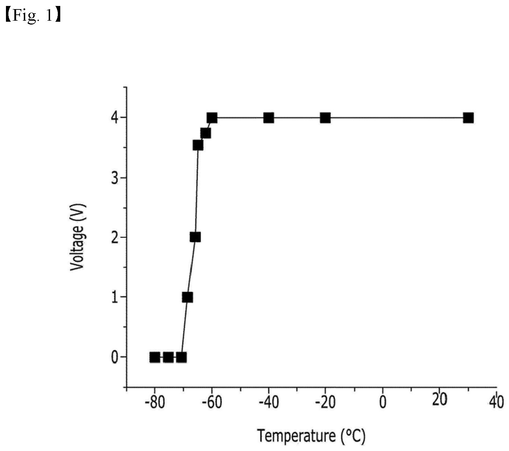

FIG. 1 is a graph showing a change in battery voltage according to cooling temperature according to an embodiment of the present invention.

Referring to FIG. 1, it can be confirmed that, in the battery treatment method according to an embodiment of the present invention, a minimum cooling time for cooling the battery can be derived in the step of freezing the battery. Specifically, it can be confirmed that the minimum cooling time is related to battery weight, external cooling temperature, and target temperature.

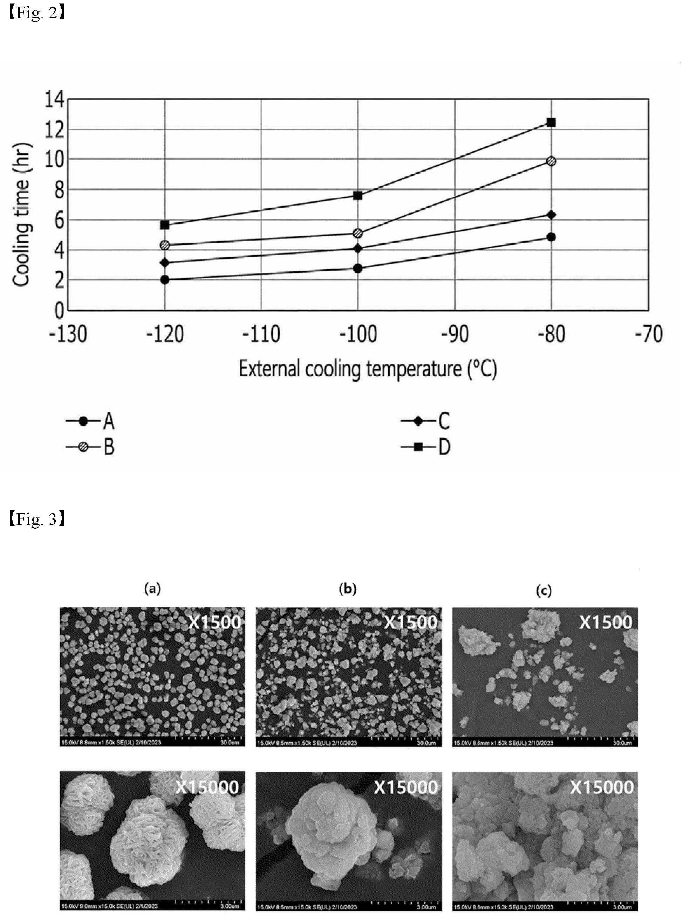

FIG. 2 is a graph showing a relationship among battery weight, external cooling temperature, and cooling time according to an embodiment of the present invention.

Referring to FIG. 2, when the target temperature was set to -70°C and the battery weights were 2.5 kg (A), 10 kg (B), 20 kg (C), and 50 kg (D), respectively, external cooling temperature and minimum cooling time are shown. When the battery is cooled, it can be confirmed that the electrolyte solution of the battery starts to be cooled after a predetermined time and reaches a state in which the voltage becomes 0. Through this, it can be confirmed that, in cooling the battery, a minimum holding time is required to sufficiently cool the inside, specifically the electrolyte solution.

Specifically, in a heat transfer situation for cooling in which heat is taken away to the outside, it can be confirmed that, when the specific heat of the battery itself is considered, battery weight and time for cooling are required. Even in a heat transfer situation for cooling in which heat is taken away to the outside, when the specific heat of the battery itself is considered, it can be confirmed that battery weight and time for cooling are required.

As described above, in the present invention, a minimum time required for cooling can be confirmed using an external cooling temperature for freezing, a target temperature, and battery weight in order to cool the battery.

Table 1 below shows minimum cooling times according to battery weight and external cooling temperature.

**[Table 1]**

| | Battery Weight [kg] | External Cooling Temperature [°C] | Target Temperature [°C] | Minimum Cooling Time [h] |
|---|---|---|---|---|
| A_1 | 2.5 | -120 | -70 | 1.9 |
| A_2 | 2.5 | -100 | -70 | 2.9 |
| A_3 | 2.5 | -80 | -70 | 4.4 |
| B_1 | 10 | -120 | -70 | 3.1 |
| B_2 | 10 | -100 | -70 | 4.6 |
| B_3 | 10 | -80 | -70 | 7.0 |
| C_1 | 20 | -120 | -70 | 3.9 |
| C_2 | 20 | -100 | -70 | 5.8 |
| C_3 | 20 | -80 | -70 | 8.8 |
| D_1 | 50 | -120 | -70 | 5.3 |
| D_2 | 50 | -100 | -70 | 7.9 |
| D_3 | 50 | -80 | -70 | 11.9 |

Referring to Table 1, it can be confirmed that, as the battery weight decreases, the minimum cooling time required for the battery to be cooled is reduced. In addition, it can be confirmed that, when cooling is performed for the minimum cooling time derived from the relational expression according to battery weight, external cooling temperature, and target temperature, the battery, specifically, the electrolyte of the battery, is cooled. In addition, when the battery is cooled for a time equal to or longer than the minimum cooling time shown in Table 1, no fire occurs in a subsequent process, that is, a battery crushing process.

An experiment was conducted on the fire occurrence state of crushed material when the battery was frozen for a time shorter than the minimum cooling time required for cooling. In the experiment, when the battery weight was 25 kg, the external cooling temperature was -95°C, and the target freezing temperature was -70°C, the experiment was performed for 5 hours, which was shorter than the minimum cooling time of 7 hours, which is the value of the following Equation 4. [Equation 4] $Minimum cooling time = A \times \left({W}^{0.33}\right)$

In Equation 4,
A = 4 × e^{(-0.02×dT)}, W = battery weight (kg), dT = |external cooling temperature - target temperature|, and || means an absolute value.

An experiment was conducted on the fire occurrence state of crushed material when the battery was frozen for the minimum freezing time or longer required for cooling. The experiment was performed under the same battery weight, external cooling temperature, and minimum freezing time as in the experiment conducted on the fire occurrence state of crushed material when the battery was frozen for a time shorter than the minimum cooling time required for cooling, except that the minimum freezing time was 7 hours or longer.

Table 2 below compares the fire occurrence states of Example and Comparative Example according to the same battery weight, external cooling temperature, and minimum freezing time. The fire occurrence state was determined as "∘" when fire occurrence was observed after battery crushing, and "×" when fire occurrence was not observed.

**[Table 2]**

| | Battery Weight [kg] | External Cooling Temperature [°C] | Target Temperature [°C] | Equation 1 | Actual Cooling Time [h] | Fire Occurrence |
|---|---|---|---|---|---|---|
| Comparative Example | 25 | - 95 | - 70 | 7.0 | 5 | ○ |
| Example | 25 | - 95 | - 70 | 7.0 | 7 | × |

Referring to Table 2, it can be confirmed that, when the battery is cooled for a value smaller than the value of Equation 4 corresponding to the minimum cooling time, the electrolyte is not cooled, and thus fire occurs after battery crushing. As described above, when the battery is cooled with the value of Equation 4 as the minimum cooling time, it can be confirmed that the crushed material can be stably utilized without fire after battery crushing.

### Selective Leaching Method of Compound Including Lithium and Aluminum

Selective leaching of the compound including lithium and aluminum through sulfuric acid leaching of Ni-Co-Mn alloy particles obtained through high-temperature heat treatment and having the compound including lithium and aluminum positioned on a surface thereof (Li leaching) can be explained by the following reaction schemes.

[Reaction Scheme 1] Ni(s)+H₂SO₄(aq)=NiSO₄(aq)+H₂(g), ΔG°m=-46.3 (kJ/mol)

[Reaction Scheme 2] Co(s)+H₂SO₄(aq)=CoSO₄(aq)+H₂(g), ΔG°m=-54.7 (kJ/mol)

[Reaction Scheme 3] Li₂O(s)+H₂SO₄(aq)=Li₂SO₄(aq)+H₂O(aq), ΔG°m=-260.5 (kJ/mol)

As shown in Reaction Schemes 1 and 2, Gibbs free energy during leaching of Ni and Co in sulfuric acid is -46 kJ/mol to -53 kJ/mol, which is about 20% lower than Gibbs free energy during leaching of lithium oxide in sulfuric acid (-260.5 kJ/mol), and thus it can be confirmed that the leaching reaction is not accelerated.

In one Example, Ni-Co-Mn alloy particles obtained through high-temperature heat treatment and having a compound including lithium and aluminum positioned on a surface thereof were subjected to selective leaching of the compound including lithium and aluminum for 120 minutes under conditions of pH=0.4 to 1.0, temperature=50°C, and sulfuric acid equivalent ratio of 1.0 to 1.6 M.

Specifically, Table 3 shows results of selective Li leaching rate (%) over time when the sulfuric acid equivalent ratio=1.0 M and temperature=50°C, Table 4 shows results of selective Li leaching rate (%) over time when the sulfuric acid equivalent ratio=1.2 M and temperature=50°C, and Table 5 shows results of selective Li leaching rate (%) over time when the sulfuric acid equivalent ratio=1.6 M and temperature=50°C.

As can be confirmed from Tables 3 to 5 below, it can be confirmed that a Li leaching rate of 95% or more can be secured while leaching rates of Ni, Co, and Mn can be controlled to 20% or less.

**[Table 3]**

| Time (min) | Li | Ni | Co | Mn |
|---|---|---|---|---|
| 0 | 0 | 0 | 0 | 0 |
| 30 | 78.1 | 0.9 | 0.9 | 2.7 |
| 60 | 85.6 | 1.7 | 2.1 | 5.1 |
| 90 | 92.4 | 2.9 | 3.6 | 7.8 |
| 120 | 97.2 | 3.8 | 4.4 | 10.0 |

**[Table 4]**

| Time (min) | Li | Ni | Co | Mn |
|---|---|---|---|---|
| 0 | 0 | 0 | 0 | 0 |
| 30 | 83.1 | 1.4 | 1.8 | 2.9 |
| 60 | 88.2 | 3.6 | 3.2 | 6.2 |
| 90 | 94.1 | 4.9 | 5.5 | 9.6 |
| 120 | 99.4 | 6.5 | 7.0 | 12.3 |

**[Table 5]**

| Time (min) | Li | Ni | Co | Mn |
|---|---|---|---|---|
| 0 | 0 | 0 | 0 | 0 |
| 30 | 84.3 | 3.8 | 4.1 | 4.5 |
| 60 | 90.1 | 7.6 | 8.6 | 9.1 |
| 90 | 95.1 | 12.5 | 12.6 | 13.5 |
| 120 | 99.8 | 16.2 | 17.1 | 18.6 |

### Leaching Method of Valuable-Metal Recovered Alloy Particles

After selectively recovering Li, valuable-metal recovered alloy particles were recovered through magnetic separation. The valuable-metal recovered alloy particles thus recovered were leached in a sulfuric acid solution according to pH, temperature, oxygen blowing amount, sulfuric acid equivalent ratio, and pressurized condition as described below, and leaching rates were examined. In the present invention, the oxygen to be blown may include air, oxygen, or hydrogen peroxide.

Table 6 shows results of leaching rate (%) of the valuable-metal recovered alloy particles according to oxygen addition when obtaining a sulfate solution at temperature=80°C, sulfuric acid equivalent ratio=2 M, and pressurized condition=1 atm. Table 7 shows results of leaching rate (%) of the valuable-metal recovered alloy particles according to pressurized condition when obtaining a sulfate solution at temperature=80°C, sulfuric acid equivalent ratio=2 M, and P(O₂)=0.2 atm.

As can be confirmed from Table 6, it can be confirmed that the leaching rate is improved when oxygen is blown, and the leaching rate is improved from about 30% to 99% within the same leaching time of 48 hours.

This can be explained by Reaction Scheme 4. That is, when oxygen gas is blown, electrons are provided in the aqueous solution, and the nickel-containing alloy is dissolved into the aqueous solution in order to maintain charge balance by the number of corresponding electrons.

[Reaction Scheme 4] O₂(g)+4H⁺+2(Ni₀.₆Co₀.₂Mn₀.₂)(s)=2H₂O(l)+2[0.6Ni²⁺-0.2Co²⁺-0.2Mn²⁺] ΔG°m=-852.4 (kJ/mol)

As can be seen from Tables 6 and 7, it was also confirmed that, when the pressurized condition was changed, the leaching rate was improved and the leaching time was shortened. This is considered to be because Reaction Scheme 4 is promoted and accelerated as pressure increases, and dissolution of the nickel-containing alloy is improved.

**[Table 6]**

| P(O₂), atm | Ni | Co | Mn |
|---|---|---|---|
| 0.1 | 31 | 33 | 36 |
| 0.2 | 38 | 44 | 42 |
| 0.4 | 53 | 56 | 54 |
| 0.8 | 78 | 81 | 77 |
| 1.0 | 98 | 97 | 99 |

**[Table 7]**

| Pressurized Condition (atm) | Temp. (°C) | Ni | Co | Mn |
|---|---|---|---|---|
| 1 | 100 | 41 | 45 | 43 |
| 2 | 121 | 66 | 70 | 64 |
| 4 | 145 | 81 | 83 | 79 |
| 8 | 161 | 89 | 92 | 90 |
| 16 | 207 | 97 | 99 | 98 |

### Method for Preparing Sulfate Solution

High concentrations of impurities cause non-uniform precursor shapes when a precursor is produced and reduce ionic conductivity, thereby causing a problem in that, after a battery cell is manufactured, electrical performance evaluation is inferior.

In the present invention, valuable-metal recovered alloy particles obtained through the selective lithium leaching process and from which a lithium compound and a compound including aluminum have been removed are sulfuric acid-leached, and then sodium hydrosulfide (NaHS) may be added so that Cu among impurities can be removed based on the reactions of Reaction Schemes 5 to 7 in the sulfate solution obtained thereby, copper (Cu) may be removed, and sodium hydroxide may be added to remove residual Fe and Al. Thereafter, a high-purity Ni-containing sulfate solution can be prepared through an ion-exchange method in order to remove Ca, Mg, and the like remaining in a small amount in the sulfate solution.

Table 8 below shows components of a high-purity Ni-containing sulfate solution obtained by the method for recycling valuable metals according to the present invention.

[Reaction Scheme 5] 2CuSO₄(aq)+2NaHS=2CuS(s)+Na₂SO₄(aq)+H₂SO₄(aq)

[Reaction Scheme 6] Al₂(SO₄)₃(aq)+6NaOH=2Al(OH)₃(s)+3Na₂SO₄(aq)+H₂SO₄(aq)

[Reaction Scheme 7] Fe₂(SO₄)₃(aq)+6NaOH=2Fe(OH)₃(s)+3Na₂SO₄(aq)+H₂SO₄(aq)

**[Table 8]**

| Classification (mol%) | Ni | Co | Mn | Fe | Al | Cu |
|---|---|---|---|---|---|---|
| Example (High-Purity Ni) | 58.62 | 21.42 | 19.89 | 0.02 | 0.02 | 0.01 |

### Evaluation of Preparation of Precursor Using High-Purity Ni-Containing Sulfate Solution

According to an embodiment of the present invention, a precursor was prepared using the high-purity Ni-containing sulfate solution, and physical properties thereof were evaluated.

A precursor was prepared using the high-purity Ni-containing sulfate solution obtained according to an embodiment of the present invention, a sulfate solution prepared using reagent-grade materials having a purity of 99% or more, and a Ni-containing sulfate solution that did not undergo an impurity removal process. Specifically, the sulfate solutions according to Examples and Comparative Examples were introduced into a reactor together with the same amounts of NaOH and NH₄OH and mixed. While adjusting pH, [Ni,Co,Mn]OH₂ was coprecipitated, and a precursor was obtained through solid-liquid separation. The components and results can be confirmed through Table 9 below and FIG. 3.

Table 9 shows components of sulfate solutions according to Examples and Comparative Examples, and FIG. 3 is an SEM image observing positive electrode active material precursors for a lithium secondary battery prepared according to Examples and Comparative Examples.

As can be seen therefrom, the concentration of the high-purity Ni-containing sulfate solution shows an impurity level similar to that of the Ni-containing sulfate solution prepared using reagent-grade materials, and in the case of the impurity-unremoved sulfate solution, it can be confirmed that concentrations of Fe, Cu, and Al are very high. As can be seen from FIG. 3, in the case of the precursor prepared using the high-purity Ni-containing sulfate solution (FIG. 3(b)), the characteristics of sphericity can be confirmed to be at the same level as those of the reagent-grade material (FIG. 3(a)). However, in the case of the precursor using the sulfate solution containing high amounts of Fe, Cu, and Al (FIG. 3(C)), the shape of the precursor has low sphericity, is non-uniform, and has a high degree of particle aggregation, and thus it can be confirmed that sphericity, which is one of the important physical properties of the precursor, cannot be secured.

**[Table 9]**

| Classification (mol%) | Ni | Co | Mn | Fe | Al | Cu |
|---|---|---|---|---|---|---|
| Example (High-Purity Ni) | 58.62 | 21.42 | 19.89 | 0.02 | 0.02 | 0.01 |
| Comparative Example 1 (Impurities Not Removed) | 33.09 | 11.92 | 11.18 | 0.32 | 31.67 | 11.82 |
| Comparative Example 2 (Reagent Grade) | 58.51 | 21.83 | 19.66 | - | - | - |

The present invention is not limited to the above Examples, and may be prepared in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A method for recycling valuable metals, comprising:
preparing Ni-Co-Mn alloy particles having a compound including lithium and aluminum positioned on a surface thereof;
primarily acid-leaching the alloy particles to selectively remove the compound including lithium and aluminum positioned on the surface of the alloy particles; and
obtaining valuable-metal recovered alloy particles from which the compound including lithium and aluminum has been removed.

2. The method for recycling valuable metals of claim 1, further comprising:
secondarily acid-leaching the obtained valuable-metal recovered alloy particles to obtain a sulfate solution including Ni, Co, and Mn.

3. The method for recycling valuable metals of claim 2, further comprising:
preparing a metal hydroxide precursor containing Ni, Co, and Mn using the obtained sulfate solution.

4. The method for recycling valuable metals of claim 2,
wherein, in secondarily acid-leaching the obtained valuable-metal recovered alloy particles to obtain the sulfate solution including Ni, Co, and Mn,
the secondary acid leaching is performed while adding oxygen.

5. The method for recycling valuable metals of claim 4,
wherein the oxygen is supplied at a rate of 0.1 Nm³/hr to 20.0 Nm³/hr.

6. The method for recycling valuable metals of claim 2,
wherein secondarily acid-leaching the obtained valuable-metal recovered alloy particles to obtain the sulfate solution including Ni, Co, and Mn is performed at a temperature of 10°C to 200°C.

7. The method for recycling valuable metals of claim 2,
wherein secondarily acid-leaching the obtained valuable-metal recovered alloy particles to obtain the sulfate solution including Ni, Co, and Mn is performed in a pH range of 0.2 to 4.0.

8. The method for recycling valuable metals of claim 2,
wherein, in secondarily acid-leaching the obtained valuable-metal recovered alloy particles to obtain the sulfate solution including Ni, Co, and Mn, an equivalent ratio of an acid is 0.5 to 4.0.

9. The method for recycling valuable metals of claim 1,
wherein primarily acid-leaching the alloy particles to selectively remove the compound including lithium and aluminum positioned on the surface of the alloy particles is performed for 240 minutes or less.

10. The method for recycling valuable metals of claim 2,
wherein secondarily acid-leaching the obtained valuable-metal recovered alloy particles to obtain the sulfate solution including Ni, Co, and Mn is performed under a pressurized condition.

11. The method for recycling valuable metals of claim 10,
wherein the pressurized condition is 20 atm or less.

12. The method for recycling valuable metals of claim 2, further comprising, after secondarily acid-leaching the obtained valuable-metal recovered alloy particles to obtain the sulfate solution including Ni, Co, and Mn:
adding sodium hydrosulfide (NaHS) to the sulfate solution to remove copper from the sulfate solution.

13. The method for recycling valuable metals of claim 12,
wherein the sodium hydrosulfide is added in an amount of 0.01 mol/L to 0.5 mol/L.

14. The method for recycling valuable metals of claim 2, further comprising, after secondarily acid-leaching the obtained valuable-metal recovered alloy particles to obtain the sulfate solution including Ni, Co, and Mn:
adding sodium hydroxide to the sulfate solution to remove iron and aluminum from the sulfate solution.

15. The method for recycling valuable metals of claim 14,
wherein the sodium hydroxide is added in an amount of 0.01 mol/L to 0.5 mol/L.

16. The method for recycling valuable metals of claim 1,
wherein preparing the Ni-Co-Mn alloy particles having the compound including lithium and aluminum positioned on the surface thereof comprises:
preparing a battery containing lithium;
crushing the battery into battery crushed material;
high-temperature heat-treating the crushed battery crushed material; and
separating Ni-Co-Mn alloy particles from the high-temperature heat-treated battery crushed material.

17. The method for recycling valuable metals of claim 16,
wherein the high-temperature heat-treating is performed in a temperature range of 600°C to 1,500°C and in a gas atmosphere having an oxygen concentration range of 0.1 vol% to 2.0 vol%.

18. Valuable-metal recovered alloy particles derived from Ni-Co-Mn alloy particles having a compound including lithium and aluminum positioned on a surface thereof,
wherein a content of one or more impurities selected from the group consisting of Al, Fe, and Cu is 15 wt% or less.

19. The valuable-metal recovered alloy particles of claim 18, satisfying Equations 1 and 2: [Equation 1] $0.8 \leq \left[Ni\right] / \left[Co\right] \leq 20$ [Equation 2] $0.12 \leq \left[Ni\right] / \left[Mn\right] \leq 20$ wherein, in Equations 1 and 2,
[Ni], [Co], and [Mn] are molar ratios of Ni, Co, and Mn in the valuable-metal recovered alloy, respectively.

20. The valuable-metal recovered alloy particles of claim 18, satisfying Equation 3: [Equation 3] $0.02 \leq \left[C\right] / \left[Ni\right] \leq 7$ wherein, in Equation 3,
[C] and [Ni] are contents (wt%) of C and Ni in the valuable-metal recovered alloy particles, respectively.

21. The valuable-metal recovered alloy particles of claim 18,
wherein the valuable-metal recovered alloy particles comprise Ni, Co, and Mn in an amount of 45 wt% or more based on 100 wt% of the total valuable-metal recovered alloy particles.

22. The valuable-metal recovered alloy particles of claim 18,
wherein the valuable-metal recovered alloy particles comprise lithium in an amount of 5 wt% or less based on 100 wt% of the total valuable-metal recovered alloy particles.

23. A sulfate solution comprising Ni, Co, and Mn derived from the valuable-metal recovered alloy particles of claim 18.
